# EUROPÄISCHE PATENTSCHRIFT

(11) **EP 2 985 177 B1**
(45) Veröffentlichungstag und Bekanntmachung des Hinweises auf die Patenterteilung: **21.02.2018**
(21) Anmeldenummer: 15180725.2
(22) Anmeldetag: 12.08.2015
(51) Int. Cl.: B60N 2/44, B60N 2/64, B60N 2/68

(54) **FAHRZEUGSITZ MIT VERÄNDERBARER RÜCKENLEHNE**
VEHICLE SEAT WITH ADJUSTABLE BACKREST
SIEGE DE VEHICULE DOTE D'UNE FORME DE DOSSIER POUVANT ETRE MODIFIEE

(30) Priorität: 13.08.2014 DE 102014011885
(43) Veröffentlichungstag der Anmeldung: 17.02.2016
(73) Patentinhaber: GRAMMER AG, 92224 Amberg (DE)
(72) Erfinder: Haller, Erwin, 92262 Birgland (DE)
(74) Vertreter: Hannke, Christian

(56) Entgegenhaltungen:
- EP-A1- 2 719 575
- DE-A1-102006 020 671
- FR-A1- 2 972 399
- JP-U- H02 125 651
- US-A- 633 012

## Beschreibung

Die Erfindung betrifft einen Fahrzeugsitz umfassend ein Sitzteil und eine Rückenlehne, wobei die Rückenlehne mindestens eine sich in Rückenlehnenhöhenrichtung erstreckende linksseitige Rückenlehnenlängsstütze und mindestens eine sich in Rückenlehnenhöhenrichtung erstreckende rechtsseitige Rückenlehnenlängsstütze aufweist, wobei die Rückenlehnenlängsstützen in einem unteren Endbereich mit dem Sitzteil und/oder einem Sitzteilrahmen befestigt sind und mindestens ein Polsterelement aufweisen.

Es sind aus dem Stand der Technik Fahrzeugsitze mit einem Sitzteil und einer Rückenlehne bekannt, bei denen eine Breite der Rückenlehne entsprechend einem Fahrer bzw. Fahrgast schmal oder breit ausgebildet ist. Diese Fahrzeugsitze weisen jedoch nur eine einzige Breite der Rückenlehne auf, so dass beispielsweise bei einem Wechsel des Fahrers mit unterschiedlicher Größe und Breite der Sitzkomfort abnimmt, da der Fahrer entweder eine zu kleine Breite der Rückenlehne, wodurch der Fahrer keine optimale Abstützung seines Rückens durch die Rückenlehne erfährt, da er nicht in die Rückenlehnenform hineinpasst, oder eine zu große Breite der Rückenlehne, wodurch eine seitliche Abstützung nicht mehr gegeben ist, vorfindet. Auch sind solche Sitze in der Herstellung kostspielig und aufwändig, da eine große Anzahl verschiedener Rückenlehnenbreiten im Sortiment vorhanden sein muss.

Ein gattungsgemässer Fahrzeugsitz ist aus dem Dokument JP-H02125651 U bekannt. Darüber hinaus sind auch Kindersitze aus dem Stand der Technik bekannt, die eine Verbreiterung der Rückenlehne durch ein Auseinanderziehen der Selbigen oder durch ein Herausziehen von Polsterelementen, die innerhalb der Rückenlehne angeordnet sind oder durch Anbringung zusätzlicher Polsterelemente an der Rückenlehne ermöglicht. Hierbei werden beispielsweise sich im Inneren der Rückenlehne befindliche Abstützungen bzw. Polsterelemente über die ganze Höhenausdehnung der Rückenlehne nach außen gezogen, wodurch es möglich ist den Kindersitz auch bei Heranwachsen des Kindes längere Zeit zu benutzen. Ein solcher Aufbau genügt jedoch nicht den Anforderungen an einen Fahrzeugsitz in puncto Sicherheit, da die herausgezogenen bzw. angebrachten Abstützungen keine sichere Abstützung des Fahrers erlauben. Darüber hinaus wird durch das Herausziehen der Polsterteile entlang der gesamte Höhenrichtung auch im Beckenbereich der Breite der Rückenlehne erhöht, was zu einer mangelhaften Abstützung in diesem Bereich führt.

Es ist demzufolge Aufgabe der vorliegenden Erfindung, gattungsgemäße Fahrzeugsitze derart weiterzuentwickeln, um durch eine einfache Konstruktion des Sitzes eine schnelle und sichere Verstellung der Rückenlehne in einem oberen Bereich bei gleichzeitiger optimaler Abstützung im Beckenbereich es dem Fahrer bzw. Fahrgast zu ermöglichen, den Sitz gemäß des Komfortverständnisses des Fahrgastes schnell und einfach einzustellen. Gleichzeitig werden auch die Herstellungskosten durch einen solchen Sitz minimiert, da es nun möglich ist mit einem Sitz verschiedene Breiten der Rückenlehne einzustellen.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, dass bei einem Fahrzeugsitz umfassend ein Sitzteil und eine Rückenlehne, wobei die Rückenlehne mindstens eine sich in Rückenlehnenhöhenrichtung erstreckende linksseitige Rückenlehnenlängsstütze und mindestens eine sich in Rückenlehnenhöhenrichtung erstreckende rechtsseitige Rückenlehnenlängsstütze aufweist, wobei die Rückenlehnenlängsstützen in einem unteren Endbereich mit dem Sitzteil und/oder einem Sitzteilrahmen befestigt sind und mindestens ein Polsterelement aufweisen, ein Abstand zwischen den Rückenlehnenlängsstützen mittels mindestens einer im oberen Bereich der Rückenlehne angeordneten länglichen Rückenlehnenquerstrebe in seiner Länge veränderbar ist.

"Abstand" beschreibt hierbei den Abstand zwischen zueinander zugewandten Seiten von zwei benachbarten Rückenlehnenlängsstützen, beispielsweise zwischen der linken und der rechten Rückenlehnenlängsstütze. Synonym zum Begriff Abstand können auch die Begriffe Breite bzw. Breite der Rückenlehne verwendet werden.

Als Rückenlehnenlängsstütze ist hierbei ein Element zu verstehen, dass an seinem unteren Endbereich mit dem Sitzteil und/oder dem Sitzteilrahmen verbunden ist und sich in Rückenlehnenhöhenrichtung bis zu einem oberen Endbereich vorzugsweise durchgehend erstreckt.
Ebenso ist die Rückenlehnenquerstrebe ein Element, dass sich im Wesentlich in Sitzbreitenrichtung erstreckt und vorzugsweise mit den Rückenlehnenlängsstützen verbunden ist. Dabei ist es denkbar, dass die Rückenlehnenquerstrebe gerade oder auch gebogen ausgebildet sein kann. Weiter ist es auch möglich, dass die Rückenlehne aus einem elastischen und/oder verformbaren Material besteht, wobei auch dehnbare Materialien denkbar sind.
Es kann sich hierbei um eine starre oder eine in Bezug zum Sitzteil um eine Achse verschwenkbare Rückenlehne handeln. Es ist möglich, dass eine in einem solchen erfindungsgemäßen Fahrzeugsitz sitzende Person die Breite der Rückenlehne in einem oberen Bereich, also im Bereich der Brust bzw. der Schultern, individuell auf die jeweilige Breite der Brust bzw. der Schultern des Fahrers einstellen kann. Dadurch ist es auch möglich, ohne großen Aufwand bei einem Fahrerwechsel die Breite der Rückenlehne im oberen Bereich den Sitzkomfort optimal an die Bedürfnisse des jeweiligen Fahrers einzustellen.
Auch nachdem eine Einstellung der Rückenlehnenbreite erfolgt ist, bleibt die Breite in einem unteren Bereich der Rückenlehne, beispielsweise im Bereich der Hüfte, unverändert. Dadurch ist weiterhin eine Abstützung, vor allem in seitlicher Richtung der Rückenlehne, weiterhin gegeben. Eine Veränderung der Breite in dem unteren Bereich ist nicht notwendig, da sich der Körperbau eines Erwachsenen in diesem Bereich im Allgemeinen nicht signifikant unterscheidet, im Gegensatz zu dem oberen Bereich des Rückens des Fahrers.
Weiterhin ist eine sichere Abstützung des Fahrers in jeder Einstellung der Rückenlehne gewährleistet, da nicht wie im Stand der Technik Polsterteile herausgezogen bzw. angebracht werden, sondern Bauteile der Rückenlehne, auf denen mindestens ein Polsterelement angebracht ist, insbesondere die Rückenlehnenlängsstützen, zur Änderung der Breite in ihrer Form bzw. ihrer Anordnung verändert werden. Dadurch wird der Rücken des Fahrers weiterhin durch die stabilen Bauteile der Rückenlehne abgestützt.

Es ist durch die vorliegende Erfindung ebenso ein besonders einfacher Aufbau der Rückenlehne durch die links- und rechtsseitige Rückenlehnenlängsstützen und der mindestens einen Rückenlehnenquerstrebe realisiert, wobei vorzugsweise die mindestens eine Rückenlehnenquerstrebe mit den Rückenlehnenlängsstützen verbunden ist. Es ist dadurch eine weitere Stabilisierung der Rückenlehne durch ein Verbinden der Rückenlehnenstützen mit der mindestens einen Rückenlehnenquerstrebe möglich.

Es ist denkbar, den Abstand zwischen den Rückenlehnenlängsstützen durch die mindestens eine Rückenlehnenstrebe, die in ihrer Länge veränderbar ist, und/oder durch ein Verschieben der mindestens einen Rückenlehnenquerstrebe entlang der Rückenlehnenhöhenrichtung veränderbar ist, zu verändern.

Gemäß einer ersten Ausführungsform, wobei die mindestens eine Rückenlehnenquerstrebe in ihrer Länge veränderbar ist, wird eine Veränderung des Abstandes durch eine Veränderung der Länge der mindestens einen Rückenlehnenquerstrebe bewirkt. Mögliche Ausführungen der mindestens eine Rückenlehnenquerstrebe sind eine Drehspindel, die durch Drehung in ihrer Länge veränderbar ist, oder einen Hubzylinder, der durch Druckbeaufschlagung in seiner Länge veränderbar ist, oder aus zwei Elementen mit komplementär ausgebildeten Verzahnungen, die ineinander greifen, besteht.

Gemäß einer weiteren Ausführungsform ist es denkbar, dass die mindestens eine Rückenlehnenquerstrebe in ihrer Länge synchron oder asynchron bezüglich einer Mitte ihrer Längsausdehnung der Rückenlehnenquerstrebe veränderbar ist. Dadurch kann erreicht werden, dass die Rückenlehne in ihrer Breite nicht gleichmäßig, sondern auf einer Seite der Rückenlehne stärker als auf der anderen Seite der Rückenlehne in ihrer Breite geändert wird. Es ist daher möglich, dass die Breite der Rückenlehne sich gegebenenfalls an einen verkrümmten Rücken oder einer Arbeitssituation entsprechend, wie z.B. Bedienung eines Joystick oder dergleichen auf einer Armlehne, wodurch sich die Breite der Schultern durch eine Armverlagerung verändert, anpassen kann.

Dabei können sowohl die Drehspindel als auch der Hubzylinder in sich symmetrisch oder asymmetrisch ausgebildet sein.

Gemäß der zweiten Ausführungsform, wobei die mindestens eine Rückenlehnenquerstrebe entlang der Rückenlehnenhöhenrichtung, vorzugsweise an einer oder mehreren Rückenlehnenlängsstützen, verschiebbar ist, wird der Abstand dadurch verändert, dass sich die mindestens eine Rückenlehnenquerstrebe in ihrer Position beziehungsweise in ihrer Lage verändert. Beispielsweise kann die mindestens eine Rückenlehnenquerstrebe aus einer horizontalen Lage in eine Lage mit einem Winkel zur horizontalen Lage bewegt werden. Dadurch verkürzt sich die auf die horizontale Lage projizierte Länge, was insgesamt eine Änderung des Abstandes bewirkt. Ebenso ist es denkbar, dass die mindestens eine Rückenlehnenquerstrebe aus einer Lage mit einem Winkel zur horizontalen Lage in eine horizontale Lage gebracht wird, was eine Vergrößerung des Abstandes bedeutet.

Es ist natürlich auch eine Kombination dieser beiden Ausführungsformen denkbar, wodurch simultan eine Bewegung der mindestens einen Rückenlehnenquerstrebe entlang der Rückenlehnenhöhenrichtung und eine Längenänderung der mindestens einen Rückenlehnenquerstrebe möglich ist. Dadurch ergeben sich sehr viele Möglichkeiten zur Einstellung der Rückenlehne an sich und dem Abstand.

Gemäß einer weiteren Ausführungsform weist die Rückenlehne mindestens eine sich in Rückenlehnenhöhenrichtung erstreckende und vorzugsweise mit der mindestens einen Rückenlehnenquerstrebe verbundene mittlere Rückenlehnenlängsstütze auf, die in einem unteren Endbereich mit dem Sitzteil und/oder dem Sitzteilrahmen befestigt ist.

Diese mittlere Rückenlehnenlängsstütze ist also zwischen der links- und der rechtsseitigen Rückenlehnenlängsstütze angeordnet.

Es ist auch denkbar, dass die Rückenlehnenlängsstütze derart angeordnet ist, dass sie den Bereich der Wirbelsäule zusätzlich abstützen kann, was zu einer insgesamt guten Abstützung des Rückens und einer komfortablen Sitzposition des Fahrers führt.

Dabei kann die mittlere Rückenlehnenlängsstütze mindestens ein separates Polsterelement aufweisen oder mit dem Polsterelement/den Polsterelementen der links- und rechtsseitigen Rückenlehnenstützen verbunden sein. So kann also die Rückenlehne beispielsweise ein an den Rückenlehnenlängsstützen durchgehendes Polsterteil aufweisen, oder jede Rückenlehnenlängsstütze weist jeweils ein unabhängiges Polsterteil auf.

Es ist möglich, die Rückenlehnenlängsstützen jeweils entweder starr oder beweglich, vorzugsweise um eine Achse verschwenkbar, an dem Sitzteil und/oder dem Sitzteilrahmen anzuordnen. Gemäß einer Ausführungsform sind die linksseitige und die rechtsseitige Rückenlehnenlängsstütze und/oder die mittlere Rückenlehnenlängsstütze jeweils in ihrem unteren Bereich verschwenkbar mit dem Sitzteil und/oder dem Sitzteilrahmen befestigt. Es ist insbesondere vorteilhaft, wenn die mittlere Rückenlehnenlängsstütze nicht verschwenkbar ist, da dadurch durchgehend eine Abstützung im Wirbelsäulenbereich des Fahrers gewährleistet ist. Sind jedoch alle Rückenlehnenlängsstützen verschwenkbar angeordnet, ist eine insgesamte Verschwenkung der Rückenlehne möglich. Insbesondere ist es vorteilhaft, wenn die Schwenkachsen der Rückenlehnenlängsstützen zwar nicht parallel zueinander ausgebildet sind, aber zumindest in einer gemeinsamen Ebene liegen, wodurch insgesamt eine helixförmige bzw. torsionsmäßige Verschwenkung der Rückenlehne erfolgt, die an die Ergonomie des Menschen, vor allem bei einer Drehung des Oberkörpers in eine zur Seite oder nach hinten gerichtete Blickrichtung bzw. Arbeitsstellung, angepasst ist.

Es ist jedoch weiterhin möglich, den Abstand auch in einem verschwenkten Zustand der Rückenlehne zu verändern.

Besonders vorteilhaft kann der Abstand verändert werden, wenn zwischen der linken und der mittleren Rückenlehnenlängsstütze eine erste Rückenlehnenquerstrebe und zwischen der rechten und der mittleren Rückenlehnenlängsstütze eine zweite Rückenlehnenquerstrebe angeordnet ist.

Es ist vorstellbar, dass die erste und die zweite Rückenlehnenquerstrebe unabhängig voneinander in ihrer Länge einstellbar sind. Eine Anordnung von zwei Rückenlehnenquerstreben wirkt sich auch vorteilhaft eine mögliche torsionsmäßige Verschwenkung der Rückenlehne aus, da der obere Bereich der jeweiligen Rückenlehnenlängsstützen besser der helixförmigen Verschwenkung folgen können.

Es ist daher besonders vorteilhaft, wenn die mindestens eine Rückenlehnenquerstrebe mittels Gelenkverbindungen an den Rückenlehnenlängsstützen befestigt ist. Dadurch kann einer helixförmigen Verschwenkung besonders gut gefolgt werden.

Vorzugsweise sind die Verbindungen, vorteilhafter die Gelenkverbindungen, der mindestens einen Rückenlehnenquerstrebe mit den Rückenlehnenlängsstützen seitlich, an einem oberen Ende oder in einem hinteren Bereich der Rückenlehnenlängsstützen angeordnet.

Durch eine solche gelenkige Verbindung ist besonders vorteilhaft die Verschwenkung der Rückenlehne und/oder das Verschieben der mindestens einen Rückenlehnenquerstrebe entlang der Rückenlehnenhöhenrichtung möglich, insbesondere dann wenn die mindestens eine Rückenlehnenquerstrebe entlang einer, vorzugsweise der mittleren Rückenlehnenlängsstütze, oder zwei der Rückenlehnenlängsstützen bewegt wird.

Gemäß einer weiteren Ausführungsform ist dabei die mindestens eine Rückenlehnenquerstrebe elektrisch bzw. motorisch oder handverstellbar. Beispielsweise kann also eine Drehung der Drehspindel durch einen Motor erfolgen oder durch eine Drehung per Hand. Darüber hinaus ist es auch denkbar, dass die Bewegung bzw. Verschiebung der mindestens einen Rückenlehnenquerstrebe entlang der Rückenlehnenhöhenrichtung ebenso elektrisch bzw. motorisch oder handverstellbar ausgeführt wird.

Gemäß einer weiteren Ausführungsform ist die mindestens eine Rückenlehnenquerstrebe mit einem, um eine in einem Winkel zur Rückenlehnenhöhenrichtung vorgesehene Drehachse, drehbaren ellipsoiden Element miteinander verbunden. Das ellipsoide Element ist dabei an einer der Rückenlehnenlängsstützen angeordnet. Dabei ist vorzugsweise die Rückenlehnenquerstrebe mit einem Endbereich im Bereich eines Brennpunktes befestigt. Durch Drehung dieses ellipsoiden Elements wird die Rückenlehnenquerstrebe derart bewegt, so dass die Rückenlehnenquerstrebe bewegt wird und dadurch eine Veränderung des Abstandes hervorgerufen wird.

Vorzugsweise verbindet das drehbare ellipsoide Element die erste Rückenlehnenquerstrebe und die zweite Rückenlehnenquerstrebe in zueinander hingewandten Endbereichen miteinander. Ebenso sind auch hier die Endbereiche jeweils vorteilhaft im Bereich eines Brennpunktes angeordnet, wobei vorzugsweise das ellipsoide Element an einer mittleren Rückenlehnenlängsstütze angeordnet ist.

Um eine möglichst vorteilhafte Veränderung des Abstandes zu erhalten, ist die mindestens eine Rückenlehnenquerstrebe, bezogen auf die Rückenlehnenhöhenrichtung, vorzugsweise in der oberen Hälfte der Rückenlehne, bevorzugter im oberen Drittel der Rückenlehne und besonders bevorzugt im oberen Viertel der Rückenlehne angeordnet.

Um eine möglichst lange Betriebsdauer des Sitzes gewährleisten zu können, ist es vorteilhaft wenn die jeweiligen Bauteile der Rückenlehne, also die Rückenlehnenlängsstützen, die Rückenlehnenquerstrebe und auch die Verbindungen zum Sitzteil und/oder Sitzteilrahmen lösbar sind und daher leicht ausgetauscht werden können. Es ist besonders vorteilhaft, wenn die mindestens eine Rückenlehnenquerstrebe lösbar mit den Rückenlehnenlängsstützen verbunden ist.

Es ist jedoch auch denkbar, dass die mindestens eine Rückenlehnenquerstrebe dauerhaft mit den Rückenlehnenlängsstützen verbunden ist.

Die Materialauswahl für die Rückenlehnenlängsstützen und/oder der mindestens einen Rückenlehnenquerstrebe ist vielfältig, wird in der Regel jedoch entweder aus einem Metall oder einem elastischen Material, vorzugsweise Kunststoff, bestehen.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1: schematisch eine Vorderansicht eines erfindungsgemäßen Fahrzeugsitzes mit einem Sitzteil und einer Rückenlehne, welche eine links- und eine rechtsseitige Rückenlehnenlängsstütze sowie eine Rückenlehnenquerstrebe aufweist;
- Fig. 2: schematisch eine Ansicht des Fahrzeugsitzes gemäß Figur 1 zusätzlich mit einer mittleren Rückenlehnenlängsstütze;
- Fig. 3: Rückenlehnenquerstrebe, die als ein Hubzylinder ausgebildet ist;
- Fig. 4: Rückenlehnenquerstrebe, die als eine Drehspindel ausgebildet ist;
- Fig. 5: Rückenlehnenquerstrebe, umfassend zwei Rückenlehnenquerstrebenteile mit Verzahnungen;
- Fig. 6A: Grundstellung eines ellipsoiden Elements;
- Fig. 6B: erste Einstellung eines ellipsoiden Elements nach Drehung in eine Richtung nach Fig. 6A;
- Fig. 6C: zweite Einstellung eines ellipsoiden Elements nach Drehung in eine andere Richtung nach Fig. 6B;
- Fig. 7A: Ansicht einer weiteren Ausführungsform mit einem ellipsoiden Element in einer Grundstellung;
- Fig. 7B: erste Einstellung des ellipsoiden Elements nach Drehung in eine Richtung nach Fig. 7A;
- Fig. 7C: zweite Einstellung des ellipsoiden Elements nach Drehung in eine andere Richtung nach Fig. 7C;
- Fig. 8: schematische Vorderansicht eines erfindungsgemäßen Fahrzeugsitzes mit verändertem Abstand gemäß einer Ausführungsform mit einer ersten und einer zweiten Rückenlehnenquerstrebe;
- Fig. 9A: schematische Draufsicht eines erfindungsgemäßen Fahrzeugsitzes mit verschwenkbaren Rückenlehnenlängsstützen in einem unverschwenkten Zustand;
- Fig. 9B: schematische Draufsicht eines erfindungsgemäßen Fahrzeugsitzes mit verschwenkbaren Rückenlehnenlängsstützen in einem verschwenkten Zustand;
- Fig. 10A: schematische Rückansicht der Rückenlehnen gemäß einer Ausführungsform mit entlang der Rückenlehnenhöhenrichtung verstellbaren Rückenlehnenquerstreben in einer ersten Position;
- Fig. 10B: schematische Vorderansicht des Fahrzeugsitzes gemäß der Fig. 10A;
- Fig. 10C: schematische Draufsicht des Fahrzeugsitzes gemäß der Fig. 10A;
- Fig. 11A: schematische Rückansicht der Rückenlehnen gemäß einer Ausführungsform mit entlang der Rückenlehnenhöhenrichtung verstellbaren Rückenlehnenquerstreben in einer zweiten Position;
- Fig. 11B: schematische Vorderansicht des Fahrzeugsitzes gemäß der Fig. 11A;
- Fig. 11C: schematische Draufsicht des Fahrzeugsitzes gemäß der Fig. 11A.

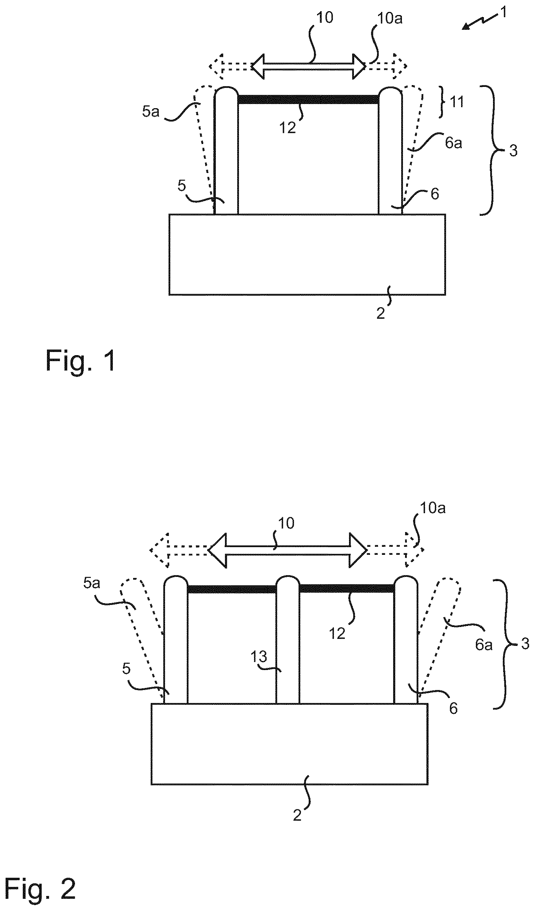

Der in der Figur 1 schematisch in einer Vorderansicht gezeigte Fahrzeugsitz 1 umfasst ein Sitzteil 2 zum Daraufsitzen eines Fahrgastes und eine Rückenlehne 3 zum rückseitigen Abstützen des Fahrgastes. Dabei umfasst die Rückenlehne 3 eine linksseitige Rückenlehnenlängsstütze 5 und eine rechte Rückenlehnenlängsstütze 6 und eine Rückenlehnenquerstrebe 12. Dabei sind die Rückenlehnenlängsstützen 5, 6 in ihren unteren Endbereichen 7, 8 (hier nicht gezeigt) mit dem Sitzteil 2 bzw. an einem Sitzteilrahmen 4 (hier nicht gezeigt) befestigt und weisen mindestens ein Polsterelement 9 (hier nicht gezeigt) auf. Die Befestigung der Rückenlehnenlängsstützen 5, 6 mit dem Sitzteil und/oder dem Sitzteilrahmen kann dabei eine starre Verbindung sein oder eine Verbindung derart, dass die Rückenlehnenlängsstützen 5, 6 jeweils um eine Schwenkachse 33a, 33b verschwenkbar sind, wobei die Schwenkachsen 33a, 33b nicht nur parallel verlaufen, sondern in einer gemeinsamen Ebene liegen und jeweils einen Winkel zueinander bilden oder sogar windschief zueinander sein können. Die Rückenlehnenlängsstützen 5, 6 können hierbei auch verschieblich mit dem Sitzteil 2 und/oder dem Sitzteilrahmen 4 verbunden sein. Die Rückenlehne 3 ist insgesamt um eine Längsachse 39 (hier nicht gezeigt) in Bezug zum Sitzteil 2 verschwenkbar. Die gestrichelten Teile der Figur zeigen hierbei einen Fahrzeugsitz mit verändertem Abstand 10a, sowie aufgrund der Abstandsänderung in ihrer Lage veränderte Rückenlehnenstützen 5a und 6a.

Schematisch wird in der Figur 1 auch die Veränderung des Abstandes 10 in einen neuen Abstand 10a, angedeutet durch die gestrichelten Linien, gezeigt.

Wie insbesondere der Figur 2 zu entnehmen ist, ist es vorzugsweise auch möglich eine mittlere Rückenlehnenlängsstütze 13, die zwischen der linken 5 und der rechten Rückenlehnenlängsstütze 6 angeordnet ist und ebenfalls mit einem unteren Endbereich 7 (nicht gezeigt) mit dem Sitzteil 2 und/oder dem Sitzteilrahmen 4 (nicht gezeigt) verbunden ist. Dadurch ist eine zusätzliche Abstützung des Fahrgastes möglich, insbesondere in dem Bereich der Wirbelsäule, was zu einem erhöhten Sitzkomfort führt.

Ebenso wird wie in Figur 1 auch in der Figur 2 die Veränderung des Abstandes 10 durch gestrichelte Linien angedeutet. Die gestrichelten Teile der Figur zeigen hierbei einen Fahrzeugsitz mit verändertem Abstand 10a, sowie aufgrund der Abstandsänderung in ihrer Lage veränderte Rückenlehnenstützen 5a und 6a.

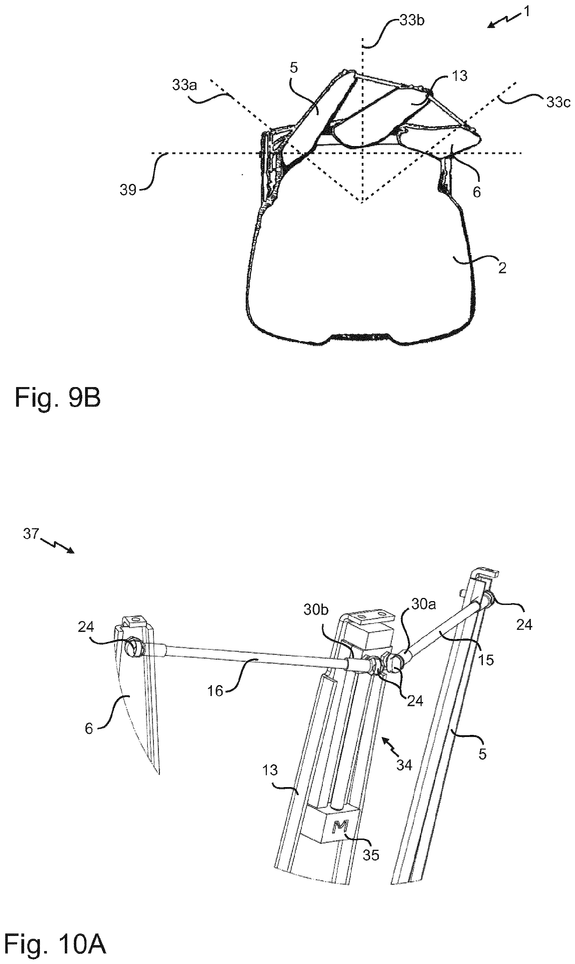

Vorzugsweise sind die Rückenlehnenlängsstützen 5, 6, 13 mit der Rückenlehnenquerstrebe 12 verbunden, wodurch eine erhöhte Stabilität der Rückenlehne 3 erreicht werden kann. Noch bevorzugter sind hierbei die Verbindungen zwischen den jeweiligen Bauteilen gelenkig ausgebildet, wie z.B. durch einen Gelenkkopf 24, der mit einem entsprechen Bauteil in Eingriff steht und so eine gelenkige Verbindung ermöglicht, wie etwa in Figur 10A zu sehen ist. Darüber hinaus sind noch weitere Verbindungsmöglichkeiten zwischen den Rückenlehnenlängsstützen 5, 6, 13 und der Rückenlehnenquerstrebe 12 denkbar, die die Rückenlehnenlängsstützen 5, 6, 13 und die Rückenlehnenquerstrebe 12 dauerhaft oder lösbar miteinander verbindet. Beispiele für eine dauerhafte Verbindung sind ein Verschweißen, Vernieten oder Verkleben der Bauteile, Beispiele für eine lösbare Verbindung sind eine Schraubenverbindung, die obige erwähnte gelenkige Verbindung oder auch eine magnetisch Verbindung, die etwa durch Dauermagnete oder auch Elektromagnete hergestellt werden kann. Weiterhin denkbar sind auch alle einem Fachmann bekannten Möglichkeiten zum Verbinden von Bauteilen.

Wie in den restlichen Figuren deutlich zu entnehmen ist, existieren verschiedene Ansätze, um den Abstand 10 bzw. die Breite der Rückenlehne 3 zu verändern.

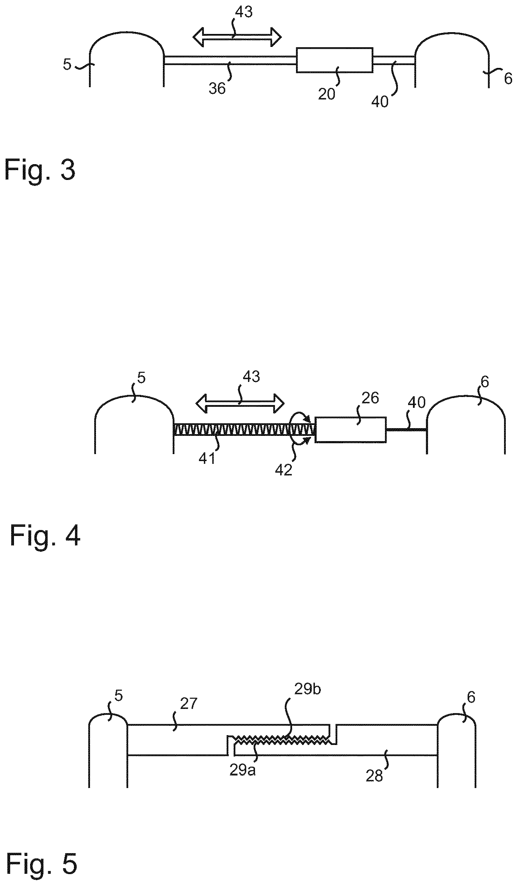

Dazu zeigt Figur 3 gemäß einer Ausführungsform die Rückenlehnenquerstrebe 12, zwischen der linken 5 und der rechten Rückenlehnenlängsstütze 6 angeordnet, die als ein Hubzylinder 20 ausgestaltet ist. Dieser Hubzylinder 20 kann an sich symmetrisch oder auch asymmetrisch ausgestaltet sein und wird gegebenenfalls durch eine äußere Quelle 25 (hier nicht gezeigt) mit dem nötigen Druck versorgt, um ein Ein- und Ausfahren des Kolbens 36, durch den Pfeil angedeutet, zu ermöglichen. Der Hubzylinder 20 ist mittels Verbindungen 40 an den Rückenlehnenlängsstützen 5, 6 befestigt. Der Pfeil 43 gibt hierbei die Bewegungsrichtung des Kolbens 36 an.

Eine weitere Ausgestaltungsmöglichkeit der Rückenlehnenquerstrebe 12 ist in Figur 4 gezeigt. Hierbei ist die Rückenlehnenquerstrebe 12 als eine Drehspindel 19 ausgebildet, die gegebenenfalls eine Umhüllung 26 aufweist. Durch Drehung der Umhüllung 26 oder auch der Spindel 19 selbst wird die Spindel 19 in die Umhüllung 26 hinein- oder herausgedreht, wodurch die Länge der Drehspindel 19 insgesamt verändert wird und dadurch auch der Abstand 10 geändert wird. Möglich ist auch, dass die Befestigungen 17 eine direkte Verbindung zur Spindel 19 haben und die Spindel 19 durch Drehen in den Befestigungen 17 bewegt wird, wodurch ebenfalls eine Änderung des Abstandes 10 hervorgerufen wird. Der Pfeil 42 gibt hierbei die Drehrichtung der Drehspindel an, der Pfeil 43 gibt wieder die Bewegungsrichtung, hier der Drehspindel, insbesondere der Gewindestange 41 an.

Möglich ist auch, dass die Rückenlehnenquerstrebe 12, wie in Figur 5 gezeigt, in ein erstes Rückenlehnenquerstrebenteil 27 und ein zweites Rückenlehnenquerstrebenteil 28 geteilt ist, die jeweils eine Verzahnung 29a bzw. 29b aufweisen. Dabei sind die Verzahnungen 29a, 29b so ausgebildet, dass sie ineinander greifen können und so eine Verbindung herstellen. Durch lösen der Zahnverbindung ist es daher eine Veränderung der Länge durch voneinander Wegbewegen oder zueinander Zubewegen der beiden Rückenlehnenquerstrebenteile 27, 28 durchführbar, die wiederum in eine Veränderung des Abstandes 10 mündet.

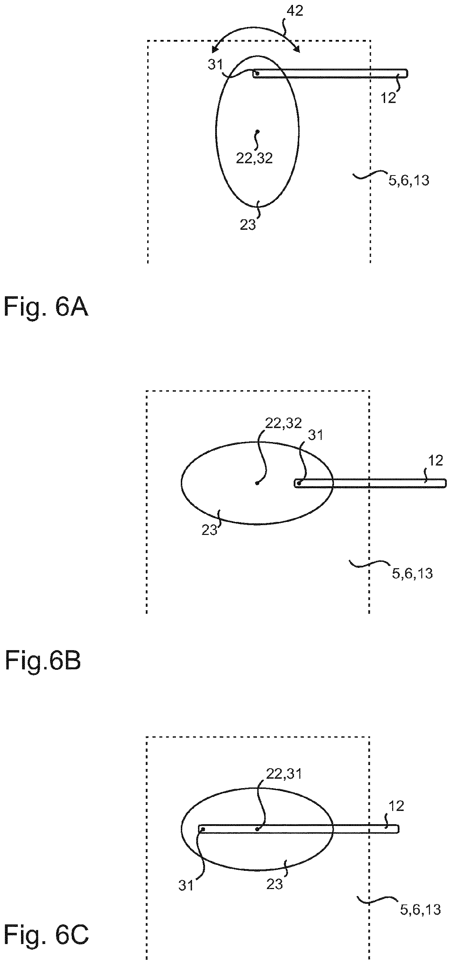

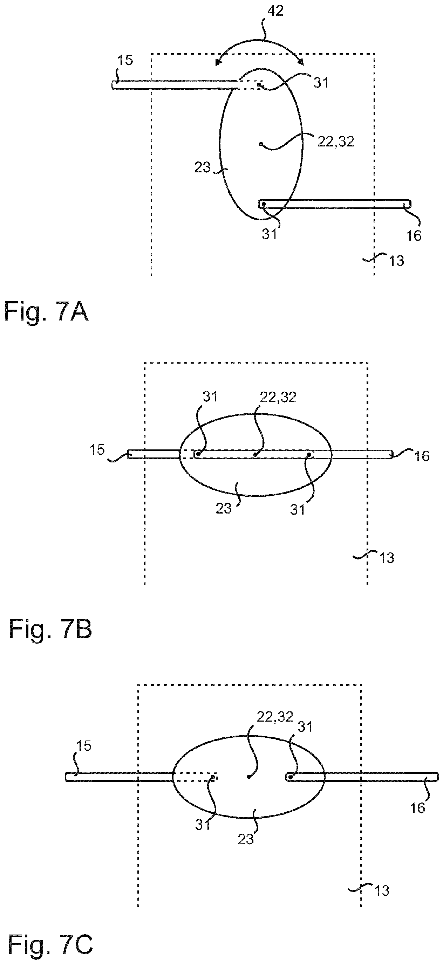

Eine Ausgestaltungsmöglichkeit zur Änderung des Abstandes, die unabhängig von der Art der Ausgestaltung der Rückenlehnenquerstrebe 12 bzw. der Rückenlehnenquerstreben 15, 16 ist, wird in den folgenden Figuren 6A-6C bzw. 7A-7C beschrieben.

Bezugnehmend auf die Figuren 6A-6C ist dabei mindestens ein, um eine in einem Winkel zur Rückenlehnenhöhenrichtung vorgesehene Drehachse 22, drehbares ellipsoides Element 23 vorgesehen, das an einer der Rückenlehnenlängsstützen 5, 6, 13 angeordnet ist. Die Drehachse 22 ist vorzugsweise im Mittelpunkt 32 des ellipsoiden Elements 23, das insbesondere als eine Ellipse ausgestaltet sein kann, d.h. dem Schnittpunkt der großen und der kleinen Halbachsen, angeordnet. Es ist jedoch auch jeder andere Punkt der Ellipse 23 als Drehpunkt 22 möglich. Die Rückenlehnenquerstrebe 12 hingegen ist vorzugsweise in einem der beiden Brennpunkte der Ellipse 23 angebracht, wobei auch hier jeder andere Punkt der Ellipse 23 als Anbringungspunkt 31 denkbar ist, solange dieser Anbringungspunkt 31 nicht mit dem Drehpunkt 22 der Ellipse 23 übereinstimmt, wodurch gewährleistet ist, dass sich die Rückenlehnenquerstrebe 12 tatsächlich bewegt. Der Pfeil 42 gibt auch hier die Drehrichtung an des ellipsoiden Elements an.

Ausgehend von einer möglichen Grundstellung, wie in Figur 6A gezeigt, wird abhängig von der Drehrichtung und der Befestigung an den Rückenlehnenlängsstützen 5, 6, 13 des ellipsoiden Elements 23 der Abstand 10 entsprechend verändert. Die Figuren 6B und 6C zeigen die unterschiedlichen Verdrehstellungen.

Eine weitere Anwendung des ellipsoiden Elements 23 ist in den Figuren 7A bis 7C gezeigt. Das ellipsoide Element 23 kann beispielsweise an der mittleren Rückenlehnenlängsstütze 13 befestigt sein und eine erste Rückenlehnenquerstrebe 15, die zwischen der linksseitigen 5 und der mittleren 13 Rückenlehnenlängsstütze angeordnet ist, und eine zweite Rückenlehnenquerstrebe 16, die zwischen der rechtsseitigen 6 und der mittleren Rückenlehnenlängsstütze 13 angeordnet ist, derart miteinander verbinden, dass die erste 15 und die zweite Rückenlehnenquerstrebe 16 mit zueinander hingewandten Endbereichen 30a, 30b an der Ellipse befestigt sind. Die Anbringungspunkte 31 und der Drehpunkt 22 des ellipsoiden Elements 23 dürfen auch hier nicht zusammenfallen.

Abhängig von der Drehrichtung des ellipsoiden Elements 23 werden hierbei die Endbereiche 30a, 30b der ersten 15 und der zweiten 16 Rückenlehnenquerstrebe voneinander wegbewegt oder zueinander hinbewegt, wodurch wiederum eine Änderung des Abstandes 10 die Folge ist. Die verschiedenen Verdrehstellungen ausgehend von der in Figur 7A gezeigten Grundstellung werden in den Figuren 7B und 7C gezeigt.

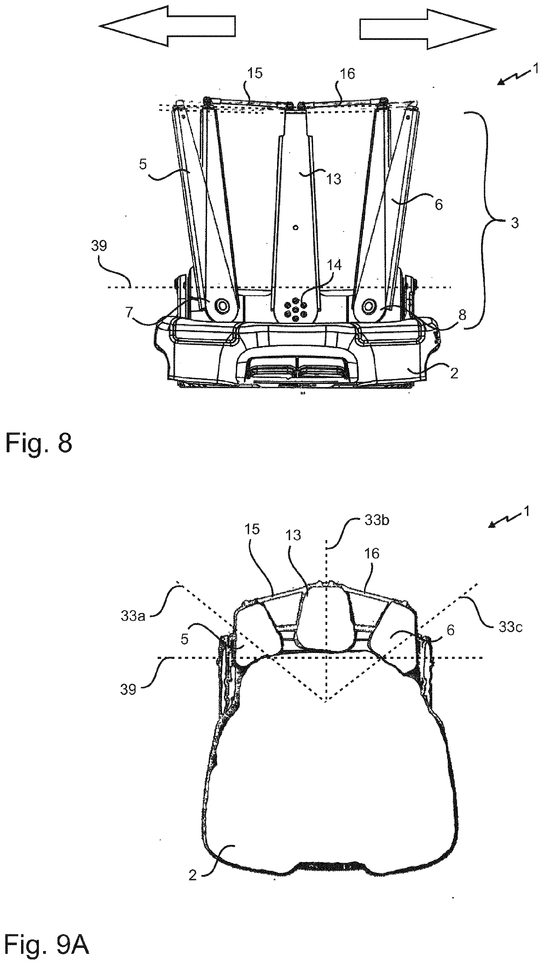

In Figur 8 wird in einer Vorderansicht des erfindungsgemäßen Fahrzeugsitzes eine Änderung des Abstandes 10 noch einmal exemplarisch mittels einer ersten 15 und einer zweiten Rückenlehnenquerstrebe 16 gezeigt. Durch Längenänderung der ersten 15 und/oder der zweiten Rückenlehnenquerstrebe 16 wird der Abstand 10 verändert. Dabei können die Rückenlehnenlängsstützen 5, 6, 13 starr oder verschwenkbar mit dem Sitzteil 2 und/oder dem Sitzteilrahmen 4 verbunden sein.

Eine Anordnung mit einer ersten 15 und einer zweiten Rückenlehnenquerstrebe 16 ist insbesondere dann vorteilhaft, wenn die Rückenlehnenlängsstützen 5, 6, 13 verschwenkbar sind, und insbesondere die Schwenkachsen 33a, 33b, 33c nicht parallel zueinander verlaufen, vorzugsweise aber in einer gemeinsamen Ebene liegen. Eine solche Anordnung der Rückenlehnenlängsstützen ist in Figur 9A und 9B gezeigt, wobei Figur 9A einen unverschwenkten Zustand des Fahrzeugsitzes 1 und Figur 9B einen verschwenkten Zustand des Fahrzeugsitzes 1 zeigt. Es ist vor allem in Figur 9B erkennbar, dass es für die Verschwenkung der Rückenlehnenlängsstützen 5, 6, 13 ein Vorteil ist, eine erste 15 und eine zweite Rückenlehnenquerstrebe 16 zu verwenden, da sich die linke 5 und die rechte Rückenlehnenlängsstütze 6 sich in verschiedene Richtungen im Falle einer Verschwenkung bewegen. Daher ist es vorteilhaft, dass sich der Bereich zwischen der linken 5 und der mittleren 13 sowie der Bereich zwischen der mittleren 13 und der rechten Rückenlehnenlängsstütze 6 unabhängig voneinander bewegen können, was eben durch die erste 15 und die zweite Rückenlehnequerstrebe 16 ermöglicht wird. Es wäre zwar möglich nur eine einzelne Rückenlehnenquerstrebe 12 zu verwenden, die z.B. aus einem elastischen Material gebildet ist, allerdings wirken durch die Verformung der Rückenlehnenquerstrebe 12 derart Kräfte auf die Rückenlehnenlängsstützen 5, 6, 13, so dass diese eventuell selbst durch diese Kräfte verformt werden und/oder durch die einwirkenden Kräfte sich eine rückstellende Kraft, die entgegen der Bewegung der Rückenlehnenlängsstützen 5, 6, 13 wirkt, ergibt.

Durch eine wie in Figur 9B gezeigte Verschwenkung der Rückenlehne 3 ist insgesamt eine helixförmige bzw. torsionsartige Verformung der Rückenlehne 3 möglich, die sich einem nach hinten verdrehten Oberkörper anpasst und so eine gute Abstützung des Fahrgastes bei einer Arbeitshaltung, die nach hinten gerichtet ist, erlaubt.

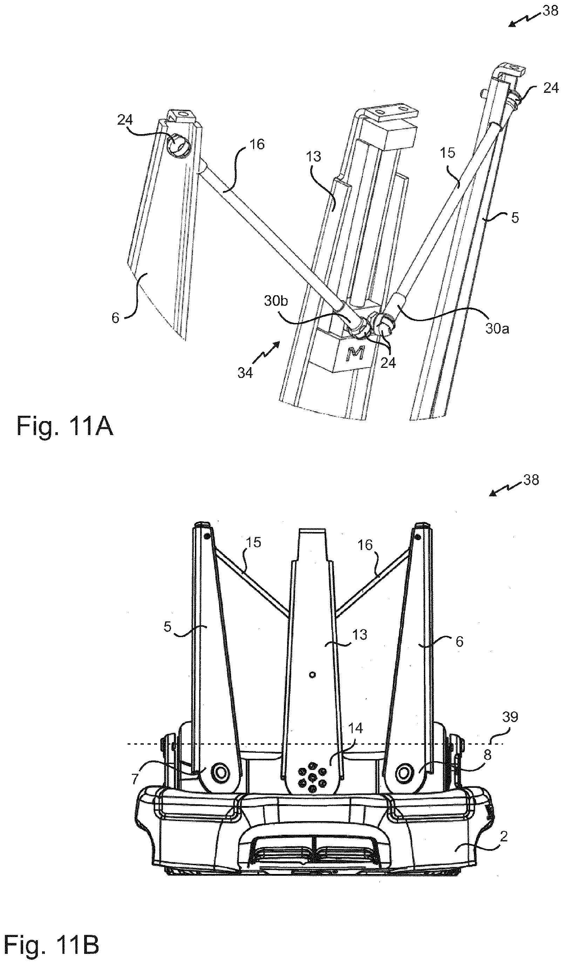

In den Figuren 10A bis 10C und 11A bis 11C wird eine grundsätzlich andere Methode zur Verstellung des Abstandes gezeigt.

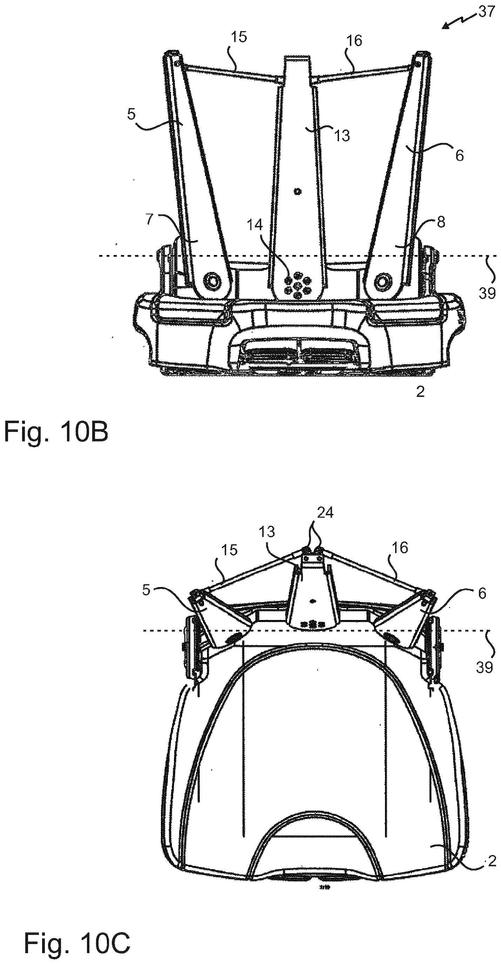

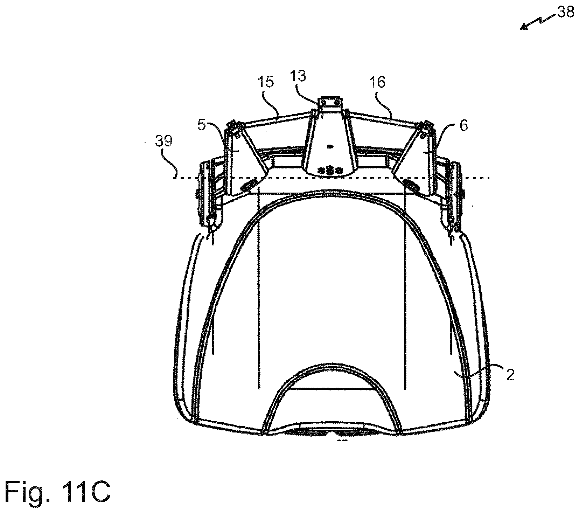

Hierbei wird die Veränderung des Abstandes 10 nicht hauptsächlich über eine Längenänderung der mindestens einen Rückenlehnenquerstrebe 12 hervorgerufen, sondern durch eine Lageveränderung der Rückenlehnenquerstrebe 12. In Figur 10B bzw. 11B ist beispielhaft eine vorderseitige Ansicht, in Figur 10A bzw. 11A eine rückseitige Ansicht und in Figur 10C bzw. 11C eine Draufsicht der Anordnung der Rückenlehnenquerstrebe 12, insbesondere einer ersten 15 und einer zweiten Rückenlehnenquerstrebe 16, an den Rückenlehnenlängsstützen 5, 6, 13 gezeigt.

Dabei sind die erste15 und die zweite Rückenlehnenquerstrebe 16 vorzugsweise gelenkig mittels Gelenkverbindungen 24 an den Rückenlehnenlängsstützen 5, 6, 13 angebracht und insbesondere sind die Rückenlehnenquerstreben 15, 16 an der mittleren Rückenlehnenlängsstütze 13 derart angebracht, dass eine Verschiebung der Rückenlehnenquerstrebe 12, insbesondere der zueinander hingewandten Endbereichen 30a, 30b möglich ist. Dazu sind die Endbereiche 30a, 30b der Rückenlehnenquerstreben 15, 16 an der mittleren Rückenlehnenlängsstütze 13 vorzugsweise über eine Vorrichtung angebracht, wobei eine Verschiebevorrichtung 34 eine Verschiebung der Endbereiche 30a, 30b der Rückenlehnenquerstreben 15, 16 nach unten und oben bezüglich der Rückenlehnenhöhenrichtung ermöglicht. Eine derartige Verschiebung kann beispielsweise mittels eines Motors 35 erfolgen, der sich an der mittleren Rückenlehnenlängsstütze 13 entlang der Rückenlehnenhöhenrichtung bewegt, wobei jedoch auch andere Möglichkeiten denkbar sind. Solche Möglichkeiten sind beispielsweise ein mechanisches Bewegen, etwa durch Drehung einer Drehspindel, oder durch eine Beaufschlagung mit einer Federkraft, oder eine Bewegung mittels eines pneumatischen Zylinders.
In der Figur 10A wird hierbei eine erste Position 37 gezeigt, bei der sich die Rückenlehnenquerstreben 15, 16 bezüglich der Rückenlehnenhöhenrichtung in einer obersten Stellung befinden. Diese erste Position 37 ist in diesem Beispiel gleichbedeutend mit einem maximalen Abstand 10.
Wird die Verschiebevorrichtung 34 bezüglich der Rückenlehnenhöhenrichtung nach unten bewegt, so verringert sich durch die Lageveränderung der Rückenlehenquerstreben 15, 16 der Abstand 10, was zu einer schmaleren Rückenlehnenbreite führt. In Figur 11A ist dabei eine zweite Position 38 gezeigt, bei der sich die Rückenlehnenquerstreben 15, 16 bezüglich der Rückenlehnenhöhenrichtung in einer untersten Stellung befinden. Diese zweite Position 38 ist in diesem Beispiel gleichbedeutend mit einem minimalen Abstand 10.
In den Figuren 10A bis 10C und 11A bis 11C sind die Rückenlehnenquerstreben 15,16 zwar in ihrer Länge fest, es ist aber auch möglich, obig beschriebene Rückenlehnenquerstreben 12, 15, 16, die in ihrer Länge veränderbar sind, in Verbindung mit der Verschiebevorrichtung 34 zu verwenden. Dadurch ist dem Fahrgast ein großer Einstellspielraum des Abstandes 10 bzw. der Breite der Rückenlehne 3 möglich. Insbesondere ist auch hier entweder eine synchrone oder asynchrone Verstellung des Abstandes 10 möglich, wobei synchron und asynchron sich hierbei auf die Längenverstellung der ersten 15 und zweiten Rückenlehnenquerstrebe 16 bezieht.

### Bezugszeichenliste

- 1: Fahrzeugsitz
- 2: Sitzteil
- 3: Rückenlehne
- 4: Sitzteilrahmen
- 5: linksseitige Rückenlehnenlängsstütze
- 5a: linksseitige Rückenlehnenlängsstütze
- 6: rechtsseitige Rückenlehnenlängsstütze
- 6a: rechtsseitige Rückenlehnenlängsstütze
- 7: unterer Endbereich
- 8: unterer Endbereich
- 9: Polsterelement
- 10: Abstand
- 10a: geänderter Abstand
- 11: oberer Bereich
- 12: Rückenlehnenquerstrebe
- 13: mittlere Rückenlehnenlängsstütze
- 14: unterer Endbereich
- 15: erste Rückenlehnenquerstrebe
- 16: zweite Rückenlehnenquerstrebe
- 17: Gelenkverbindung
- 18: Mittelachse
- 19: Drehspindel
- 20: Hubzylinder
- 21: Verzahnungselement
- 22: Drehachse/Drehpunkt
- 23: ellipsoides Element
- 24: Gelenkkopf
- 25: äußere Quelle
- 26: Umhüllung
- 27: erstes Rückenlehnenquerstrebenteil
- 28: zweites Rückenlehnenquerstrebenteil
- 29a: Verzahnung
- 29b: Verzahnung
- 30a: Endbereich
- 30b: Endbereich
- 31: Anbringungspunkt
- 32: Mittelpunkt des ellipsoiden Elementes
- 33a: Schwenkachse
- 33b: Schwenkachse
- 33c: Schwenkachse
- 34: Verschiebevorrichtung
- 35: Motor
- 36: Kolben
- 37: erste Position
- 38: zweite Position
- 39: Schwenkachse
- 40: Verbindung
- 41: Gewindestange
- 42: Drehrichtung
- 43: Bewegungsrichtung

## Patentansprüche

1. Fahrzeugsitz (1) umfassend ein Sitzteil (2) und eine Rückenlehne (3), wobei die Rückenlehne (3) mindestens eine sich in Rückenlehnenhöhenrichtung erstreckende linksseitige Rückenlehnenlängsstütze (5) und mindestens eine sich in Rückenlehnenhöhenrichtung erstreckende rechtsseitige Rückenlehnenlängsstütze (6) aufweist, wobei die Rückenlehnenlängsstützen (5, 6) in einem unteren Endbereich (7, 8) mit dem Sitzteil (2) und/oder einem Sitzteilrahmen (4) befestigt sind und mindestens ein Polsterelement (9) aufweisen, wobei ein Abstand (10) zwischen den Rückenlehnenlängsstützen (5, 6) mittels mindestens einer im oberen Bereich (11) der Rückenlehne (3) angeordneten länglichen Rückenlehnenquerstrebe (12) in seiner Länge veränderbar ist, um in dem oberen Bereich (11) eine Breite der Rückenlehne (3) einzustellen, **dadurch gekennzeichnet, dass** in einem unteren Bereich der Rückenlehne (3) eine Breite der Rückenlehne (3) unverändert bleibt.

2. Fahrzeugsitz (1) nach Anspruch 1,
**dadurch gekennzeichnet, dass**
die mindestens eine Rückenlehnenquerstrebe (12) mit den Rückenlehnenlängsstützen (5, 6) verbunden ist.

3. Fahrzeugsitz nach Anspruch 1 oder 2,
**dadurch gekennzeichnet, dass**
der Abstand (10) zwischen den Rückenlehnenlängsstützen (5, 6) durch die mindestens eine Rückenlehnenquerstrebe (12), die in ihrer Länge veränderbar ist, und/oder durch ein Verschieben der mindestens einen Rückenlehenquerstrebe (12) entlang der Rückenlehnenhöhenrichtung veränderbar ist.

4. Fahrzeugsitz (1) nach einem der vorhergehenden Ansprüche,
**dadurch gekennzeichnet, dass**
die Rückenlehne (3) mindestens eine sich in Rückenlehnenhöhenrichtung erstreckende und mit der mindestens einen Rückenlehnenquerstrebe (12) verbundene mittlere Rückenlehnenlängsstütze (13) aufweist, die in einem unteren Endbereich (14) mit dem Sitzteil (2) und/oder dem Sitzteilrahmen (4) befestigt ist.

5. Fahrzeugsitz (1) nach Anspruch 4,
**dadurch gekennzeichnet, dass**
die linksseitige und die rechtsseitige Rückenlehnenlängsstütze (5, 6) und/oder die mittlere Rückenlehnenlängsstütze (13) jeweils in ihrem unteren Bereich (7, 8, 14) verschwenkbar mit dem Sitzteil (2) und/oder dem Sitzteilrahmen (4) befestigt sind.

6. Fahrzeugsitz (1) nach einem der Ansprüche 4 bis 5,
**dadurch gekennzeichnet, dass**
zwischen der linken und der mittleren Rückenlehnenlängsstütze (5, 13) eine erste Rückenlehnenquerstrebe (15) und zwischen der rechten und der mittleren Rückenlehnenlängsstütze (6, 13) eine zweite Rückenlehnenquerstrebe (16) angeordnet ist.

7. Fahrzeugsitz (1) nach einem der vorhergehenden Ansprüche,
**dadurch gekennzeichnet, dass**
die mindestens eine Rückenlehnenquerstrebe (12) mittels Gelenkverbindungen an den Rückenlehnenlängsstützen befestigt ist.

8. Fahrzeugsitz (1) nach einem der vorhergehenden Ansprüche,
**dadurch gekennzeichnet, dass**
die mindestens eine Rückenlehnenquerstrebe (12) in ihrer Länge synchron oder asynchron bezüglicher einer Mitte ihrer Längsausdehnung der mindestens einen Rückenlehnenquerstrebe (12) veränderbar ist und elektrisch bzw. motorisch oder handverstellbar veränderbar ist.

9. Fahrzeugsitz (1) nach einem der vorhergehenden Ansprüche,
**dadurch gekennzeichnet, dass**
die mindestens eine Rückenlehnenquerstrebe (12) eine Drehspindel (19), die durch Drehung in ihrer Länge veränderbar ist, oder ein Hubzylinder (20), der durch Druckbeaufschlagung in seiner Länge veränderbar ist, ist, oder aus einem ersten Rückenlehnenquerstrebenteil (27) und einem zweiten Rückenlehnenquerstrebenteil (28) mit komplementär ausgebildeten Verzahnungen (29a, 29b), die ineinander greifen, besteht.

10. Fahrzeugsitz (1) nach einem der vorhergehenden Ansprüche,
**dadurch gekennzeichnet, dass**
die mindestens eine Rückenlehnenquerstrebe (12) mit einem, um eine in einem Winkel zur Rückenlehnehöhenrichtung vorgesehene Drehachse (22), drehbaren ellipsoiden Element (23) miteinander verbunden ist/sind.

11. Fahrzeugsitz (1) nach Anspruch 10,
**dadurch gekennzeichnet, dass**
das drehbare ellipsoide Element (23) die erste Rückenlehnenquerstrebe (15) und die zweite Rückenlehnenquerstrebe (16) in zueinander hingewandten Endbereichen (30a, 30b) miteinander verbindet.

12. Fahrzeugsitz (1) nach einem der vorhergehenden Ansprüche,
**dadurch gekennzeichnet, dass**
die mindestens eine Rückenlehnenquerstrebe (12) im oberen Drittel, bevorzugt im oberen Viertel, der Rückenlehne bezüglich der Höhenrichtung der Rückenlehne (3) angeordnet ist.

13. Fahrzeugsitz (1) nach einem der vorhergehenden Ansprüche,
**dadurch gekennzeichnet, dass**
die mindestens eine Rückenlehnenquerstrebe (12) dauerhaft oder lösbar mit den Rückenlehnenlängsstützen (5, 6, 13) verbunden ist.

14. Fahrzeugsitz (1) nach einem der vorhergehenden Ansprüche,
**dadurch gekennzeichnet, dass**
die Rückenlehnenlängsstützen (5, 6, 13) und/oder die mindestens eine Rückenlehnenquerstrebe (12) aus Metall oder einem elastischen Material, vorzugsweise Kunststoff, bestehen.

## Claims

1. Vehicle seat (1) comprising a seat part (2) and a backrest (3), the backrest (3) comprising at least one left-hand backrest longitudinal support (5) extending in the vertical direction of the backrest and at least one right-hand backrest longitudinal support (6) extending in the vertical direction of the backrest, the backrest longitudinal supports (5, 6) being attached to the seat part (2) and/or a seat-part frame (4) in a lower end region (7, 8) and comprising at least one cushion element (9),
it being possible for the length of a distance (10) between the backrest longitudinal supports (5, 6) to be adjusted by means of at least one elongated backrest cross strut (12) arranged in the upper region (11) of the backrest (3) in order to set a width of the backrest (3) in the upper region (11), **characterised in that**,
in a lower region of the backrest (3), a width of the backrest (3) remains unchanged.

2. Vehicle seat (1) according to claim 1,
**characterised in that**
the at least one backrest cross strut (12) is connected to the backrest longitudinal supports (5, 6).

3. Vehicle seat according to either claim 1 or claim 2,
**characterised in that**
the distance (10) between the backrest longitudinal supports (5, 6) can be adjusted by the at least one backrest cross strut (12), of which the length can be adjusted, and/or by displacing the at least one backrest cross strut (12) in the vertical direction of the backrest.

4. Vehicle seat (1) according to any of the preceding claims,
**characterised in that**
the backrest (3) comprises at least one central backrest longitudinal support (13) which extends in the vertical direction of the backrest, is connected to the at least one backrest cross strut (12) and is attached in a lower end region (14) to the seat part (2) and/or the seat-part frame (4).

5. Vehicle seat (1) according to claim 4,
**characterised in that**
the left-hand and right-hand backrest longitudinal supports (5, 6) and/or the central backrest longitudinal support (13) are each pivotally attached in the lower region (7, 8, 14) thereof to the seat part (2) and/or the seat-part frame (4).

6. Vehicle seat (1) according to any of claims 4 to 5,
**characterised in that**
a first backrest cross strut (15) is arranged between the left-hand and the central backrest longitudinal supports (5, 13) and a second backrest cross strut (16) is arranged between the right-hand and the central backrest longitudinal supports (6, 13).

7. Vehicle seat (1) according to any of the preceding claims,
**characterised in that**
the at least one backrest cross strut (12) is attached to the backrest longitudinal supports by means of link joints.

8. Vehicle seat (1) according to any of the preceding claims,
**characterised in that**
the length of the at least one backrest cross strut (12) can be adjusted synchronously or asynchronously with respect to a centre of the longitudinal extension of the at least one backrest cross strut (12) and can be adjusted electrically or by means of a motor or manually.

9. Vehicle seat (1) according to any of the preceding claims,
**characterised in that**
the at least one backrest cross strut (12) is a rotary spindle (19), of which the length can be adjusted by being rotated, or is a lifting cylinder (20), of which the length can be adjusted by applying pressure, or consists of a first backrest cross strut part (27) and a second backrest cross strut part (28) having complementary toothed portions (29a, 29b) which mesh with one another.

10. Vehicle seat (1) according to any of the preceding claims,
**characterised in that**
the at least one backrest cross strut (12) is/are connected to an ellipsoid element (23) which is rotatable about an axis of rotation (22) which is provided at an angle to the vertical direction of the backrest.

11. Vehicle seat (1) according to claim 10,
**characterised in that**
the rotatable ellipsoid element (23) interconnects the first backrest cross strut (15) and the second backrest cross strut (16) in end regions (30a, 30b) that face one another.

12. Vehicle seat (1) according to any of the preceding claims,
**characterised in that**
the at least one backrest cross strut (12) is arranged in the upper third, preferably in the upper quarter, of the backrest relative to the vertical direction of the backrest (3).

13. Vehicle seat (1) according to any of the preceding claims,
**characterised in that**
the at least one backrest cross strut (12) is permanently or detachably connected to the backrest longitudinal supports (5, 6, 13).

14. Vehicle seat (1) according to any of the preceding claims,
**characterised in that**
the backrest longitudinal supports (5, 6, 13) and/or the at least one backrest cross strut (12) consist of metal or a resilient material, preferably plastics material.

## Revendications

1. Siège de véhicule (1) comportant une partie siège (2) et un dossier (3), le dossier (3) présentant au moins un support longitudinal de dossier côté gauche (5) s'étendant dans la direction verticale du dossier et au moins un support longitudinal de dossier côté droit (6) s'étendant dans la direction verticale du dossier, les supports longitudinaux de dossier (5, 6) étant attachés à la partie siège (2) et/ou à un cadre de partie siège (4) dans une région d'extrémité inférieure (7, 8) et comprenant au moins un élément de rembourrage (9),
dans lequel
la longueur d'une distance (10) entre les supports longitudinaux de dossier (5, 6) est ajustable au moyen d'au moins une entretoise transversale de dossier allongée (12) disposée dans la région supérieure (11) du dossier (3), afin d'ajuster une largeur du dossier (3) dans la région supérieure (11), **caractérisé par le fait que** dans une région inférieure du dossier (3) une largeur du dossier (3) demeure inchangée.

2. Siège de véhicule (1) selon la revendication 1,
**caractérisé par le fait que**
ladite au moins une entretoise transversale de dossier (12) est reliée aux supports longitudinaux de dossier (5, 6).

3. Siège de véhicule selon l'une des revendications 1 ou 2,
**caractérisé par le fait que**
la distance (10) entre les supports longitudinaux de dossier (5, 6) est ajustable par ladite au moins une entretoise transversale de dossier (12), dont la longueur est ajustable, et/ou par un déplacement de ladite au moins une entretoise transversale de dossier (12) le long de la direction verticale du dossier.

4. Siège de véhicule (1) selon l'une des revendications précédentes,
**caractérisé par le fait que**
le dossier (3) présente au moins un support longitudinal de dossier intermédiaire (13) qui s'étend dans la direction verticale du dossier et est relié à ladite au moins une entretoise transversale de dossier (12), et qui est attaché à la partie siège (2) et/ou au cadre de siège (4) dans une région d'extrémité inférieure (14).

5. Siège de véhicule (1) selon la revendication 4,
**caractérisé par le fait que**
les supports longitudinaux de dossier côté gauche et côté droit (5, 6) et/ou le support longitudinal de dossier intermédiaire (13) sont respectivement attachés de manière pivotante dans leur région inférieure (7, 8, 14) à la partie siège (2) et/ou au cadre de siège (4).

6. Siège de véhicule (1) selon l'une des revendications 4 et 5,
**caractérisé par le fait que**
une première entretoise transversale de dossier (15) est disposée entre les supports longitudinaux de dossier gauche et intermédiaire (5, 13) et une seconde entretoise transversale de dossier (16) est disposée entre les supports longitudinaux de dossier droit et intermédiaire (6, 13).

7. Siège de véhicule (1) selon l'une des revendications précédentes,
**caractérisé par le fait que**
ladite au moins une entretoise transversale de dossier (12) est attachée aux supports longitudinaux de dossier au moyen de liaisons articulées.

8. Siège de véhicule (1) selon l'une des revendications précédentes,
**caractérisé par le fait que**
la longueur de ladite au moins une entretoise transversale de dossier (12) est ajustable de façon synchrone ou asynchrone par rapport à un centre de leur étendue longitudinale de ladite au moins une entretoise transversale de dossier (12) et est ajustable électriquement ou au moyen d'un moteur ou manuellement.

9. Siège de véhicule (1) selon l'une des revendications précédentes,
**caractérisé par le fait que**
ladite au moins une entretoise transversale de dossier (12) est une broche tournante (19) dont la longueur est ajustable par rotation, ou est un cylindre de levage (20) dont la longueur est ajustable par application de pression, ou consiste en une première partie entretoise transversale de dossier (27) et une seconde partie entretoise transversale de dossier (28) ayant des parties dentées (29a, 29b) conçues de façon complémentaire qui s'engrènent les unes dans les autres.

10. Siège de véhicule (1) selon l'une des revendications précédentes,
**caractérisé par le fait que**
ladite au moins une entretoise transversale de dossier (12) est/sont reliées entre elles par un élément ellipsoïdal (23) apte à tourner autour d'un axe de rotation (22) qui est disposé à un angle par rapport à la direction verticale du dossier.

11. Siège de véhicule (1) selon la revendication 10,
**caractérisé par le fait que**
l'élément ellipsoïdal rotatif (23) relie ensemble la première entretoise transversale de dossier (15) et la seconde entretoise transversale de dossier (16) dans des régions d'extrémité (30a, 30b) qui sont tournées l'une vers l'autre.

12. Siège de véhicule (1) selon l'une des revendications précédentes,
**caractérisé par le fait que**
ladite au moins une entretoise transversale de dossier (12) est disposée dans le tiers supérieur, de préférence dans le quart supérieur, du dossier par rapport à la direction verticale du dossier (3).

13. Siège de véhicule (1) selon l'une des revendications précédentes,
**caractérisé par le fait que**
ladite au moins une entretoise transversale de dossier (12) est reliée de manière permanente ou détachable aux supports longitudinaux de dossier (5, 6, 13).

14. Siège de véhicule (1) selon l'une des revendications précédentes,
**caractérisé par le fait que**
les supports longitudinaux de dossier (5, 6, 13) et/ou la au moins une entretoise transversale de dossier (12) sont faits de métal ou d'une matière élastique, de préférence une matière plastique.
